(19) Europäisches Patentamt
European Patent Office
Office européen des brevets

(11) Publication number: **0 647 665 A2**

(12) # EUROPEAN PATENT APPLICATION

(21) Application number: **94113541.0**

(51) Int. Cl.[6]: **C08G 18/10**, C08G 18/36

(22) Date of filing: **30.08.94**

(30) Priority: **12.10.93 US 114707**

(43) Date of publication of application:
**12.04.95 Bulletin 95/15**

(84) Designated Contracting States:
**ES FR GB IT NL**

(71) Applicant: **EASTMAN KODAK COMPANY**
**343 State Street**
**Rochester,**
**New York 14650-2201 (US)**

(72) Inventor: **Xiao, Hang Xiong, c/o Eastman Kodak Co.**
**Patent Legal Staff,**
**343 State Street**
**Rochester,**
**New York 14650-2201 (US)**
Inventor: **Frisch, Kurt Charles, c/o Eastman Kodak Co.**
**Patent Legal Staff,**
**343 State Street**
**Rochester,**
**New York 14650-2201 (US)**
Inventor: **Treasurer, Urvee Yash, c/o Eastman Kodak Co.**
**Patent Legal Staff,**
**343 State Street**
**Rochester,**
**New York 14650-2201 (US)**
Inventor: **Shah, Pranav Vallabhdas, c/o Eastman Kodak Co.**
**Patent Legal Staff,**
**343 State Street**
**Rochester,**
**New York 14650-2201 (US)**
Inventor: **Yang, Shi, c/o Eastman Kodak Co.**
**Patent Legal Staff,**
**343 State Street**
**Rochester,**
**New York 14650-2201 (US)**

(74) Representative: **Marlow, Nicholas Simon**
**Reddie & Grose**
**16, Theobalds Road**
**London WC1X 8PL (GB)**

(54) **Self-crosslinkable water-dispersible poly(urethane-urea)compositions.**

(57) Water dispersible, one component, self crosslinkable poly(urethane-urea) composition that is stable and capable of curing at room temperature is prepared by forming a prepolymer comprising an alcoholized drying oil, a diisocyanate, a polyalkylene ether polyol, and a dihydroxy containing alkanoic acid polyol; neutralizing the prepolymer; contacting the neutralized prepolymer with water and diamine. The waterborne poly(urethane-urea) composition exhibits good chemical resistance, adhesion, abrasion, and high gloss properties when used as a coating.

EP 0 647 665 A2

This invention relates to water-dispersible poly(urethane-urea) compositions that are useful as coatings.

Solvent based poly(urethane-urea) compositions made from drying oils have been sold for use as coatings for fabrics, plastics, wood, metal, and the like. These coating compositions offer good properties at a reasonable price. Nevertheless, there is a continued need to develop new waterborne poly(urethane-urea) coatings based on drying oils for a number of reasons including environmental and economical concerns associated with solvents. Government agencies are continuing to place more emphasis on reduction of solvent emissions into the atmosphere. Additionally the price of solvents has escalated in recent years.

Although various preparations of drying oil based waterborne poly(urethane-urea) compositions are known, discovery of new preparations and alternative compositions is needed to extend the mechanical properties of the polyurethane compositions.

The problems stated above have been solved with the discovery of novel poly(urethane-urea) compositions preparable by a process comprising: (A) forming a prepolymer comprising: (1) an alcoholized drying oil; (2) a diisocyanate; (3) a polyalkylene ether polyol; and (4) a dihydroxy containing alkanoic acid polyol; (B) neutralizing said prepolymer; (C) contacting said neutralized prepolymer with water and a diamine to form an amine chain extended poly(urethane-urea) dispersion wherein said chain-extended poly(urethane-urea) crosslinks at about room temperature upon drying.

The inventive composition provides a one component, self-crosslinking composition that is stable and capable of drying and crosslinking at room temperature. When tested as a coating, the inventive composition was found to exhibit good flexibility and toughness in addition to at least one of the following characteristics: good chemical resistance, adhesion, abrasion, or high gloss. The inventive water based composition also offers a reduction of solvent emissions into the atmosphere as compared with traditional solvent based polyurethane coatings. Additionally, the one-component, self-crosslinkable water dispersion composition is a highly versatile composition that is easy to use in coating applications.

As used herein, alcoholized drying oils include hydroxyl-containing reaction products of fatty acids or drying oils containing at least one carboxylic molecule and a hydroxyl donor (preferably an alcohol or polyol), as are well-known to those skilled in the art. Suitable alcoholized drying oils may be purchased as already alcoholized (thus having the hydroxyl group present, such as, for example, castor oil based diol) or may be prepared by known alcoholysis reactions where the fatty acid or drying oil is reacted with a hydroxyl donor (preferably an alcohol or polyol) to provide the oil or fatty acid with at least two hydroxyl groups. The alcoholized product, may be a mixture of monoglycerides, diglycerides, unreacted polyol (or alcohol), and unreacted oil (or fatty acid), as is typically obtained after an alcoholysis reaction. Alternatively, the alcoholized product may be subjected to molecular distillation to obtain a higher monoglyceride content, as described in US-A-2,634,234; US-A-2,634,278 and US-A-2,2634,279 (and as described in copending application U.S. Serial No. 08/115,280, by U. Treasurer, assigned to Eastman Kodak).

According to the invention, any suitable fatty acids or drying oils that may be alcoholized may be employed. Preferred drying oils include dehydrated castor oil, soybean oil, sunflower oil, linseed oil, safflower oil, and mixtures thereof. Preferred fatty acids include linoleic acid, palmitoleic acid, linolenic acid, eleosteric acid, licanic acid, arachidonic acid, ricinoleic acid, and mixtures thereof. As used herein, the term fatty acid is interchangeable with drying oil. More preferably employed are drying oils selected from dehydrated castor oil, sunflower oil, linseed oil, safflower oil, soybean oil, or mixtures thereof, with linseed oil the most preferred. Particularly preferred alcohols and polyols that may be used for alcoholizing suitable fatty acid or drying oils may be selected from the group consisting of adipate polyester polyol, caprolactone based polyol, polyether triol, polyester based triol, trimethylol propane, polyether diol, pentaerythritol, and mixtures thereof, with trimethylol propane and pentaerythritol more preferred, and trimethylol propane most preferred. As known, alcoholysis reactions typically employ esterification catalysts such as, metal hydroxides, oxides, and metal salts of organic acids. Substantial completion of the alcoholysis of the drying oil or fatty acid may be accomplished by techniques known to those skilled in the art, including, for example, characterization of the alcoholized oil by hydroxyl value, viscosity, gas chromatography and content of monoglyceride. Preferably, the alcoholized drying oil is prepared by reacting the alcohol and drying oil in a ratio ranging from 0.5:1 to 10:1, more preferably from 0.75:1 to 5:1, and most preferably from 1:1 to 5:1, of alcohol:drying oil (as used herein, the term fatty acid is interchangeable with drying oil and the term alcohol is interchangeable with polyol).

The diisocyanate component of the prepolymer may be aliphatic, alicyclic or aromatic. Aromatic diisocyanates may be less preferred in situations in which yellowing due to the effects of ultraviolet light is undesirable. Generally suitable diisocyanates have at least 6 carbon atoms and usually do not have more than 40 carbon atoms. Diisocyanates of 6 to 20 carbon atoms in the hydrocarbon group are preferred such

as those selected from the group consisting of 2,4-tolylene diisocyanate; 2,6-tolylene diisocyanate; 1,4-cyclohexane diisocyanate; dicyclohexylmethane 4,4'-diisocyanate ($H_{12}MDI$); xylylene diisocyanate, 1-isocyanato-3-isocyanatomethyl-3,5,5-trimethylcyclohexane (isophorone diisocyanate) (IPDI); hexamethylene diisocyanate; tetramethylxylene diisocyanate (TMXDI); 2,4,4-trimethylhexamethylene diisocyanate, and mixtures thereof. Most preferably the diisocyanate is selected from the group consisting of $H_{12}MDI$, IPDI, TMXDI or mixtures thereof.

It has been discovered that the addition of polyalkylene ether polyol assists to reduce the functionality of the alcoholized drying oil mixture, thus avoiding gellation of the mixture prior to the chain extension that occurs when the diamine is contacted with the water dispersed prepolymer. As shown in the Comparative Examples hereinafter, prepolymer mixtures lacking the polyalkylene ether polyol result in a gellation which prevents the chain extension with the diamine. The chain extension allows for a final poly(urethane-urea) composition to have a higher molecular weight, thus contributing to the desired mechanical properties. More preferably the polyalkylene ether polyols employed have a molecular weight of from 400 to 6000, including, for example, poly(oxytetramethylene)glycol (PTMG); poly(oxypropylene)glycol (PPG); poly(caprolactone)-glycol (PCL); poly(1,6-hexanediol adipate)glycol (PHAG); poly(1,4-butyl adipate)glycol (PBAG), hydroxy-terminated polybutadiene (Poly-bd); poly(carbonate)glycol (PCG), and mixtures thereof. Most preferably employed is poly(oxytetramethylene)glycol.

The dihydroxy containing alkanoic acid polyol suitable for the prepolymer may have one or two substituents on the alpha carbon atoms. The substituent may be, for example, a hydroxyl or alkyl group (such as an alkylol group). The polyol has at least one carboxylic group, and generally has 1 to 3 carboxylic groups, per molecule. The polyol alkanoic acids preferred are alkanoic acids having 2 to 20 or more carbon atoms (more preferably from 2 to 10 carbon atoms), such as, tartaric acid, the 2,2,-dialkylol alkanoic acids (having, for example, an alkylol group of 1 to 3 carbon atoms), and the like. A particularly preferred group of dihydroxy alkanoic acids are the 2,2-dimethylolalkanoic acids which may be represented by the structural formula

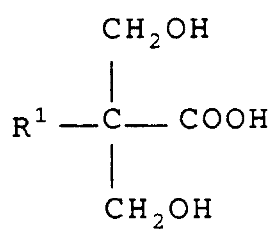

wherein $R^1$ represents hydrogen or a $C_1$-$C_8$ alkyl including, for example, 2,2-dimethylolalkanoic acids selected from 2,2-dimethylolacetic acid, 2,2-dimethylolpropionic acid, and mixtures thereof. Most preferably employed is 2,2-dimethylolpropionic acid (DMPA).

The prepolymer formed is a COOH-containing, NCO-terminated prepolymer. Techniques known to those skilled in the art may be employed in preparing the prepolymer. For example, the reaction may be carried out in the presence of a catalyst such as organo-tin compounds, tertiary amines, and the like, to assist diisocyanate-polyol reaction. More particularly, the prepolymer reaction may be carried out by reacting a stoichiometric excess of diisocyanate as compared with the total amount of the two polyol components (the polyalkylene ether polyol and the dihydroxy alkanoic acid polyol) and the alcoholized drying oil. The reaction temperature for making the prepolymer is generally elevated, but sufficiently low enough to avoid undue reaction of the carboxylic group of the dihydroxy alkanoic acid polyol with the diisocyanate. Such temperatures may be up to 90°C or more, with 60°C to 80°C being preferred. Advantageously, the ratio of the -NCO group in the diisocyanate per isocyanate-reactive -OH group present in the mixture of polyols (that is, the dihydroxy alkanoic acid polyol, polyalkylene ether polyol, and alcoholized drying oil) is present on an equivalent basis ranging from 1:1 to 2.5:1, more preferably from 1.4:1 to 1.8:1, or most preferably approximately 1.6:1. Preferably, the blending ratio of alcoholized drying oil:polyalkylene ether polyol falls within the range of 1:99 to 99:1, more preferably from 10:90 to 80:20, and most preferably from 1:1 to 9:1. The acid value of the prepolymer preferably falls within the range of 5 to 100, more preferably from 10 to 60, on a solids basis. Preferably, an alkanoic acid polyol:polyalkylene ether polyol plus alcoholized drying oil ratio falling within a range of from 10:1 to 0.1:1, more preferably from 2:1 to 0.8:1, and most preferably approximately 1:1 is employed. The isocyanate group content of the prepolymer may be, for example, 5 to 20 weight percent, preferably 10 to 20 weight percent, of the prepolymer solids.

The neutralization of the prepolymer may be accomplished by techniques known to those skilled in the art. Preferred neutralization agents include, for example, ammonium hydroxide or amines having at least one salt-forming amine, preferably a tertiary nitrogen group. Preferred agents include aliphatic tertiary amines, for example, trialkylamines having 3 to 12 carbon atoms, such as trimethylamines, methyl diethylamine, N,N-dimethylethanolamine, tripropylamine, and the like. The alkyl groups of the amine may be substituted with, for instance, hydroxy groups, such as alkanoltertiaryamines including dialkylmonoalkanol, alkyldialkanol and trialkanolamines. For purposes of availability, triethylamine [$N(C_2H_5)_3$] is the most preferred neutralization agent.

Upon neutralization, the prepolymer becomes a pendant salt group containing isocyanate terminated prepolymer (referred to hereinafter as an end-capped polymer salt). Preferably an inert hydrophilic solvent is employed to facilitate contacting the neutralized polymer with water and diamine. Preferred hydrophilic solvents that may be employed include organic solvents that are essentially inert to the reaction (should not contain active hydrogen as determined by the Zerewitinoff test). Preferred solvents may be selected from dimethylformamide, esters, ethers, ketones (such as, methyl ethyl ketone and acetone), ketoesters, glycol-ether-esters, chlorinated hydrocarbons, aliphatic and alicyclic hydrocarbon pyrrolidones (such as, N-methylpyrrolidones), hydrogenated furans, and aromatic hydrocarbons. When employed, most preferably the solvent used is N-methylpyrrolidone.

Known drying agents commonly used in waterborne surface coatings may optionally be used after the neutralization, water dispersion, or amine chain reaction steps to aid the final composition in drying time (when typically a final product having been prepared using a drying agent dries more quickly once coated on a surface). Drying agents that may be used can be in a solid form or in solution, including, for example, organo-metal salts, such as, cobalt, manganese, vanadium, zirconium, zinc, barium, calcium, cerium and the like. When employed, preferably salts of cobalt, calcium, manganese and zirconium (more preferably cobalt, calcium, zirconium and mixtures thereof) are used as drying agents. The amount of drying agent used is generally based on the drying oil component in the formulation as within the skill of those familiar with the art.

After the neutralization step, water is contacted with the end-capped polymer salt in an amount sufficient to form a water dispersion. The amount of water necessary to form the dispersion is adjustable, depending upon a number of factors including, for example, viscosity and solids content. The term "dispersion", as used herein broadly encompasses a two-phase aqueous poly(urethane-urea) system in which the poly(urethane-urea) is the dispersed phase. Preferably the water dispersion is prepared using a ratio of water:end-capped polymer salt of from 50:1 to 90:1, more preferably 50:1 to 80:1, and most preferably 60:1 to 70:1.

According to the invention, diamine is employed to react with the isocyanate groups of the endcapped polymer salt to provide for chain extension of the polymer. Preferably the diamine contains from 0 to 10 carbon atoms, with alkylene diamines having up to 6 carbon atoms more preferred. Most preferably employed is ethylene diamine. The amount of diamine used for the chain extension reaction may be varied depending upon the isocyanate equivalent weight of the prepolymer. Preferred stoichiometric amounts of diamine range from 80% to 105% based on the isocyanate equivalent. More preferably employed is a diamine within the range of from 90 to 100%, most preferably from 95 to 100%.

Preferably the method of preparation of the poly(urethane-urea) involves at least two sequential steps where the prepolymer is formed and neutralized. Upon neutralization, the endcapped polymer salt may be contacted with water and diamine simultaneously or stepwise. More preferably, the preparation occurs by sequential steps of formation of the prepolymer and neutralization followed by a water-dispersion step and immediately thereafter with a chain extension with diamine step. Most preferably, the neutralization step is followed by the optional step of exposing the end-capped polymer with a drying agent and water prior to including the diamine.

Preferably the poly(urethane-urea) dispersion has a pH ranging from 7.5 to 13, more preferably from 8 to 11, and most preferably fall between approximately 8 to 9. The viscosity of the dispersion is preferably from 20 cps (cps = centipoise) to 8000 cps, more preferably from 30 cps to 1000 cps, and most preferably approximately 50 to 100 cps at room temperature. The non-volatile solids content of the composition may generally range from 20 to 50% of the total weight of the dispersion, more preferably from 28 to 35%.

The resulting poly(urethane-urea) dispersion is a room temperature crosslinkable, waterborne composition that is useful for coating applications. The crosslinking (or curing) of the dispersion occurs upon drying of the poly(urethane-urea) dispersion, typically aster it is applied on a surface (preferably a hard surface) as a coating. Although not wishing to be bound by theory, it is believed that the crosslinking reaction operates through the oxidation and opening of the double bonds provided by the alcoholized drying oil component. The composition provides users with an easy to use, one-component coating that exhibits many desirable

mechanical and chemical resistance characteristics, such as those described hereinafter in the examples. Although the water dispersion may generally dry at any temperature, one of the advantages of this invention is that the crosslinking reaction may occur at room temperature. Further, an additional second component is not required for the crosslinking reaction. The self-crosslinking that occurs upon the dispersion drying at room temperature provides one of the valuable advantages of this composition over the prior art. The crosslinking reaction is preferably accomplished at room temperature after a period of exposure in air preferably ranging from 1 to 15 days, more preferably 1 day to 8 days, and most preferably after 3 to 5 days.

The poly(urethane-urea) composition preferably provides translucent dispersions which produce glossy (preferably high glossy) rapid drying films with good mechanical properties and chemical resistance. The dispersion is useful for coating hard surfaces, particularly wood.

Optionally, additives which may be included in the dispersion include those commonly used in waterborne compositions, such as, for example, one or more of the following: plasticizers, pigments, colorants, surfactants, thickeners, heat stabilizers, leveling agents, and the like.

The following examples provide illustration of the invention but are not intended to limit the scope of the invention thereto.

## EXAMPLES

The general preparation of the inventive composition is shown in the nonlimiting reaction scheme of Example 1, shown below.

## Preparation of Poly(urethane-urea) Dispersion

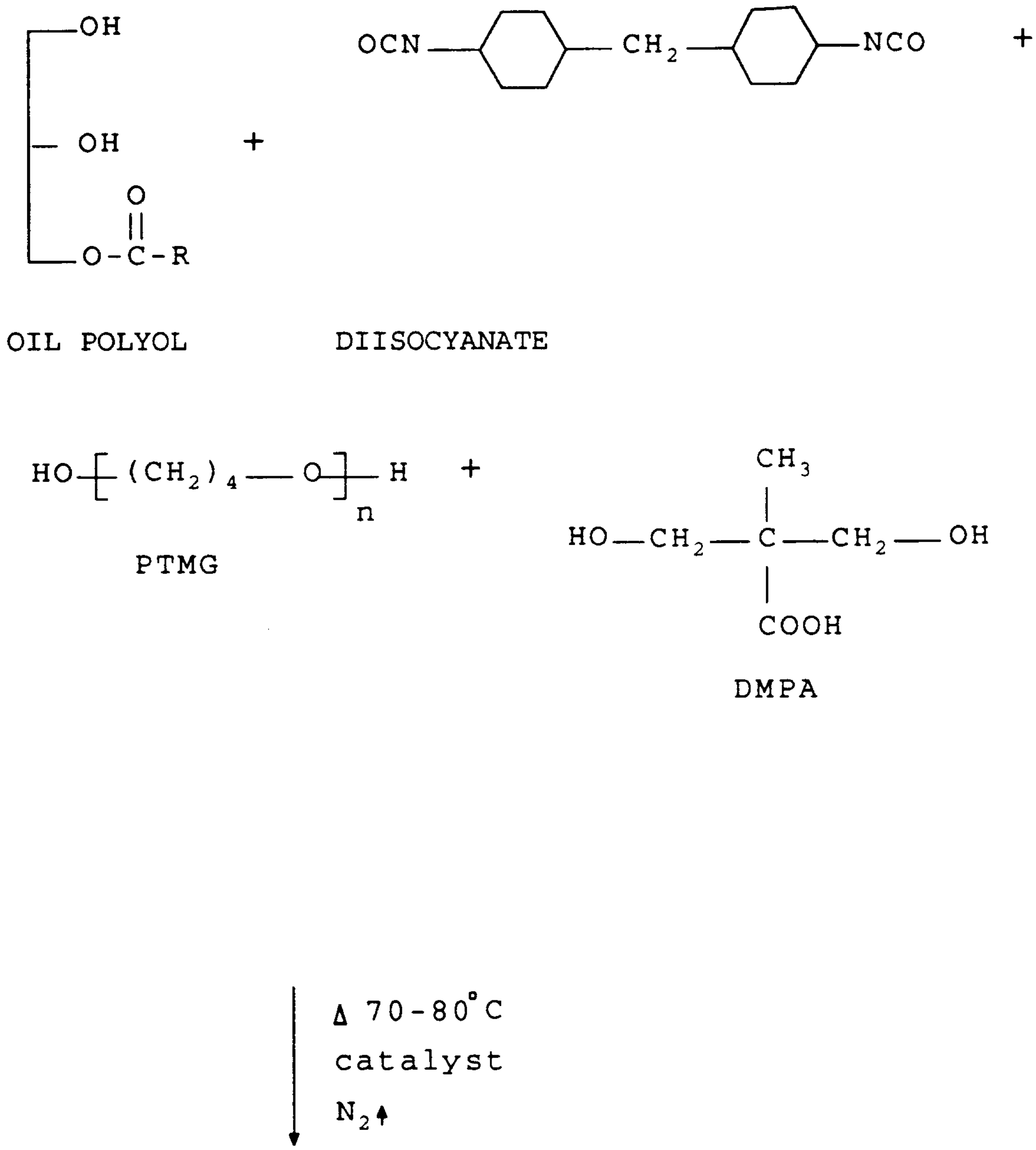


OIL POLYOL

DIISOCYANATE

PTMG

DMPA

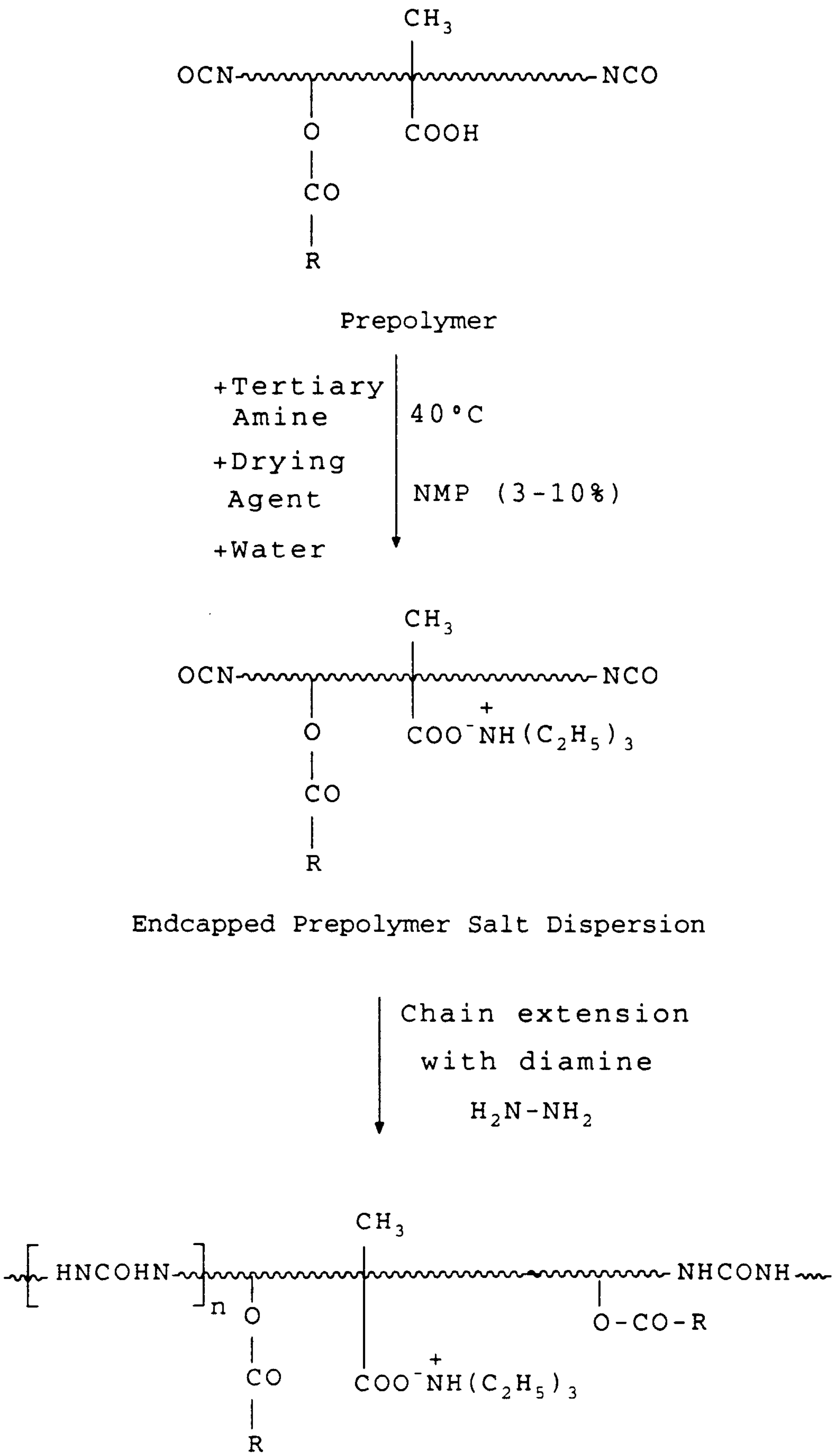


Prepolymer

Endcapped Prepolymer Salt Dispersion

Poly(urethane-urea) Dispersion

As shown in the structure, R represents an unsaturated fatty acid and the tertiary amine employed was a N-$(C_2H_5)_3$. DMPA is an abbreviation for dimethylolpropionic acid, and PTMG is an abbreviation of poly-(oxytetramethylene)glycol. The poly(urethane-urea) dispersion is abbreviated as PUU throughout the examples.

The following CHART A summarizes the compositions of Examples 1-21. Examples 1-17 used linseed oil (purchased from Cargill Co., Minneapolis, Minn.) as the drying oil that was alcoholized. Examples 18-20 differed in the alcoholized drying oil, as described in more detail in each Example.

**CHART A**

**EXAMPLES OF POLY(URETHANE-UREA) DISPERSIONS**

| Example No. | Alcohol for Alcoholysis 1. | Ratio Alcohol to Oil | Ratio Alcoholized Oil to Polyol [PTMG] 2. | Ratio DMPA 3. to Polyol | Ratio Isocyanate 4. to Polyol NCO:OH |
|---|---|---|---|---|---|
| 1 | Pentaerythritol | 1:1 | 2:1 | 1:1 | 1.6:1 |
| 2 | Pentaerythritol | 1:1 | 2.6:1 | 1:1 | 1.4:1 |
| 3 | Pentaerythritol | 1:1 | 4:1 | 1:1 | 1.6:1 |
| 4 | Trimethylol Propane | 1.3:1 | 4:1 | 1:1 | 1.4:1 |
| 5 | Trimethylol Propane | 1.3:1 | 4:1 | 1:1 | 1.5:1 |
| 6 | Trimethylol Propane | 1.3:1 | 4:1 | 1:1 | 1.8:1 |

| | | | | | |
|---|---|---|---|---|---|
| 7 | Trimethylol Propane | 1.5:1 | 4:1 | 1:1 | 1.6:1 |
| 8 | Trimethylol Propane | 1:1 | 9:1 | 1:1 | 1.5:1 |
| 9 | Trimethylol Propane | 2:1 | 1:1 | 1:1 | 1.4:1 |
| 10 | Trimethylol Propane | 2.5:1 | 1:1 | 1:1 | 1.5:1 |
| 11 | Trimethylol Propane + VORANOLâ25 1:1 | 3:1 | 4:1 | 1:1 | 1.4:1 |
| 12 | Trimethylol Propane + CASPOLâ-5003 1:1 | 3:1 | 4:1 | 1:1 | 1.6:1 |
| 13 | CASPOLâ 1962 | 1.5:1 | 4:1 | 1:1 | 1.6:1 |
| 14 | FORMREZâ 104 | 1.5:1 | 4:1 | 1:1 | 1.6:1 |
| 15 | Trimethylol Propane + FORMREZâ 104 1:1 | 3:1 | 4:1 | 1:1 | 1.6:1 |
| 16 | Trimethylol Propane + FORMREZâ ED400 1:1 | 3:1 | 3:1 | 1:1 | 1.6:1 |
| 17 | Trimethylol Propane + FORMREZâ ED400 1:1 | 3:1 | 4:1 | 1:1 | 1.5:1 |
| 18 | Trimethylol Propane | 5:1 | 4:1 | 1:1 | 1.6:1 |
| 19 | Glycerol | N/A | 4:1 | 1:1 | 1.6:1 |
| 20 | Glycerol | N/A | 4:1 | 1:1 | 1.6:1 |
| 21 | Glycerol | N/A | 4:1 | 0.75:1 | 1.6:1 |

---

1. Pentaerythritol was purchased from Penta Manufacturing Co., Fairfield, NJ; VORANOL-425 (polyether diol) was purchased from Dow Chemical Co., Midland, MI); CASPOL-5003 (polyether diol) was purchased from Caschem, Inc.; FORMREZ 104 (adipate polyester triol) was purchased from Witco Chemical Co., Houston, TX; FORMREZ ED400 (polyether diol) was purchased from Witco Chemical Co., Houston, TX.

2. PTMG is poly(oxytetramethylene) glycol purchased as TERATHANEä 2000 from E.I. duPont deNemours, Wilmington, DE.

3. DMPA is dimethylolpropionic acid, purchased from Rhone-Poulenc Chemical Co., CT.

4. The dissocyanate was dicyclohexylmethane 4 4'-diisocyanate, purchased as DESMODURä W from Miles Chem. Co., Pittsburgh, PA.

---

Throughout the examples, the inventive poly(urethane-urea) compositions were subjected to chemical resistance tests by adding 1 or 2 drops of common household ammonia; 50% ethanol; FORMULA 409ä Household Cleaner, manufactured by the CLOROX Co., Oakland, California; and WINDEXä glass cleaner, manufactured by the Drackett Products Co., Cincinnati, Ohio.

EXAMPLE 1

One hundred parts of alkali-refined linseed oil was charged in a 500 ml reaction kettle, equipped with a thermometer, dry nitrogen inlet, electrical stirrer and heating jacket. The linseed oil was preheated to 282 - 288 °C with agitation for 30 min, under dry nitrogen gas to maintain a light color. After cooling, the linseed oil was kept at 71 °C and 13.8 parts of pentaerythritol (Penta) at 1.0/1.0 mole ratio of alcohol/linseed oil were added rapidly into the reaction kettle. Calcium naphthenate (10% Ca) transesterification catalyst (0.08 parts) was added to the above mixture. The temperature was increased to 249 °-254 °C and maintained at that temperature to carry out the alcoholysis until the cloudy mixture became clear. After that, the solubility of the reaction product in methanol or ethanol was measured (one part of reaction product was dissolved in three parts of ethanol or methanol). When a clear solution of the product in ethanol or methanol was observed, the alcoholysis reaction was complete. The reaction product was a mixture of alcoholized linseed oil with various hydroxyl functionality, small amounts of unreacted free linseed oil and Penta, referred to hereinafter as "oil polyol".

A reaction kettle equipped with a thermometer, dry nitrogen inlet, stirrer and heating jacket was charged with 20 parts of the above oil polyol, 33.9 parts of a polytetramethylene glycol ether (PTMG) at 2.0/1.0 ratio of oil polyol/PTMG, 6.82 parts of dimethylolpropionic acid (DMPA) at 1.0/1.0 of DMPA/polyol ratio, 37.3 parts of dicyclohexylmethane 4 4'-diisocyanate ($H_{12}MDI$) at 1.6/1.0 of NCO/OH ratio and 0.1 parts of T-12 catalyst (dibutyl tin dilaurate catalyst) under dry nitrogen. The mixture was heated to 80 °C with agitation and the mixture was kept at this temperature until no DMPA particles were observed. The preparation of pendant COOH-containing NCO-terminated prepolymer based on the alcoholized linseed oil was complete when the NCO content, as determined by a di-n-butyl amine titration, was close to the theoretical NCO content (3.03%).

The reaction mixture was cooled to 60 °C and 5.12 parts of TEA (triethylamine) was added to it under agitation to carry out the neutralization between the COOH group of the prepolymer and TEA. The neutralization was kept at the same temperature for 30 minutes to obtain the pendant internal salt group-containing NCO-terminated prepolymer.

The reaction mixture was further cooled to 50 °C and 6.0 parts of N-methylpyrrolidone (NMP), 0.02 part of cobalt hydrocure drier, and 0.01 part of calcium drier were added with stirring. Immediately, 184 parts of water were added to the above mixture under vigorous agitation to carry out the dispersion thus forming the aqueous pendant salt group-containing NCO-terminated prepolymer.

To this dispersion was added rapidly 2.2 parts of ethylenediamine (EDA) to carry out the chain extension.

The resulting coating composition had a pH of 8-9, a viscosity of 50-100 cps at room temperature and a non-volatile content of 28-35%. The coating was a translucent dispersion producing a high-gloss, rapid drying film with good mechanical properties and chemical resistance after exposure in air for 3-5 days due to the crosslinking reaction through the oxidation and opening of the double bonds in the linseed oil structure of the coating.

The chemical resistance tests were carried out by adding one or two drops of the stated test substances materials on the surface of the dried (3-5 days) film (3-5 mil thick) at room temperature. After one hour, the chemicals were rubbed on the coating surface and the changes of the coating surface were

recorded TABLE I below.

| TABLE I | | | | | |
|---|---|---|---|---|---|
| SAMPLE NO. | Water | HOUSEHOLD AMMONIA | 50% ETHANOL | FORMULA 409 | WINDEX |
| Example 1 | N* | N | N | N | N |

*No effect to the coating

EXAMPLES 2 AND 3

The alcoholysis of linseed oil and the preparation of waterborne PUU were carried out using the same equipment and process, as described in the above Example 1, except that 2.6/1.0 of oil polyol/PTMG and 1.4/1.0 of NCO/OH ratio were selected for Example 2, and 4.0/1.0 of oil polyol/PTMG and 1.6/1.0 of NCO/OH ratio were selected for Example 3, as described in CHART A.

The resulting coating compositions have a pH of 8-9, a viscosity of 50-100 cps at room temperature and a non-volatile content of 28-35%. The coating is a translucent dispersion which produces a high gloss, rapid drying film with good mechanical properties and chemical resistance after exposure in air for 3-5 days.

The chemical resistance of the above coatings are shown below in TABLE II:

TABLE II

| SAMPLE NO. | Water | HOUSEHOLD AMMONIA | 50% ETHANOL | FORMULA 409 | WINDEX |
|---|---|---|---|---|---|
| Example 2 | N | N | W | W | C |
| Example 3 | N | N | N | C | C |

N - No effect to the coating
W - Whiten
C - Coating surface change

EXAMPLES 4-10

The alcoholysis of linseed oil and the preparation of waterborne PUU were carried out using the same equipment and process as described in the above Example 1, except TMP (trimethylolpropane) was used to replace Penta, as described in CHART A. The reaction conditions of these examples are as previously shown.

The resulting coating compositions have a pH of 8-9, a viscosity of 50-100 cps at room temperature and a non-volatile content of 28-35%. The coating is a translucent dispersion which produces a high-gloss, rapid drying film with good mechanical properties and chemical resistance after exposure in air for 3-5 days.

The chemical resistance of the above coatings are shown below in TABLE III:

TABLE III

| SAMPLE NO. | Water | HOUSEHOLD AMMONIA | 50% ETHANOL | FORMULA 409 | WINDEX |
|---|---|---|---|---|---|
| Example 4 | N | W | N | D | W |
| Example 5 | N | N | N | C | C |
| Example 6 | N | N | N | N | N |
| Example 7 | N | N | N | D | N |
| Example 8 | N | N | N | C | N |
| Example 9 | N | W | N | D | W |
| Example 10 | N | N | N | D | N |

N - No effect to the coating
W - Whiten
C - Coating surface change
D - Coatings were destroyed

Coatings based on Example 7 has 3H pencil hardness, 200 psi of lap shear strength (wood/wood) and 4336 psi tensile strength. The coating based on Example 10 has 3H pencil hardness and 500 psi of lap shear strength (wood/wood).

EXAMPLES 11-14

The alcoholysis of linseed oil and the preparation of waterborne PUU were carried out using the same equipment and process as described in the above Example 1, except a different alcohol and combination of alcohols were used to replace Penta, as described in CHART A. The preparation conditions of these examples were as previously shown.

The resulting coating compositions had a pH of 8-9, a viscosity of 50-100 cps at room temperature and a non-volatile content of 28-35%. The coating was a translucent dispersion which produced a high-gloss, rapid drying film with good mechanical properties and chemical resistance after exposure in air for 3-5 days.

The chemical resistance of the above coatings is shown in Table IV below:

TABLE IV

| SAMPLE NO. | Water | HOUSEHOLD AMMONIA | 50% ETHANOL | FORMULA 409 | WINDEX |
|---|---|---|---|---|---|
| Example 11 | N | N | N | D | N |
| Example 12 | N | N | N | D | N |
| Example 13 | N | N | N | W | N |
| Example 14 | N | N | N | D | N |

N - No effect to the coating
W - Whiten
C - Coating surface change
D - Coatings were destroyed

The mechanical properties of the above coatings are shown in Table V:

TABLE V

| Sample No. | Pencil Hardnes s | Tensile Strength, psi | Elongation % | Lap shear strength psi (wood/wood) |
|---|---|---|---|---|
| Example 11 | 3H | 2400 | 66 | 250 |
| Example 12 | 3H | 3221 | 66 | 250 |
| Example 13 | 3H | 3175 | 66 | 200 |
| Example 14 | 2H | 4692 | - | 500 |

EXAMPLES 15-17

The alcoholysis of linseed oil and the preparation of waterborne PUU were carried out using the same equipment and process as described in the above Example 1, except a different alcohol and combination of alcohols were used to replace Penta, as described in CHART A. The preparation conditions of these examples were as previously shown.

The alcoholized drying oil in Examples 18-21 was prepared or obtained as having a high yield of monoglycerides, as preparable by molecular distillation techniques. The characterization of the alcoholized drying oils for each example is summarized in CHART B below.

**CHART B**

| EXAMPLE | OIL/POLYOL RATIO | MOLECULAR DISTILLATION TEMP°C | VACUUM mTorr | ANALYSIS GC | OH |
|---|---|---|---|---|---|
| 18 | Linseed Oil / Trimethylolpropane 1:5 | 190-240 | 8-16 | 50-85 | 316 |
| 19 | Linseed Oil / Glycerol 1:5 | 190-240 | 8-16 | 50-90 | 316-320 |
| 20-21 | Sunflower Oil / Glycerol (MYVEROLâ 1892) | -- | -- | 95%+ | 316-320 |

EXAMPLE 18

One hundred parts of alkali refined linseed oil was charged into a 500 ml reaction kettle, equipped with a thermometer, dry nitrogen inlet for sub-surface purging, electrical stirrer and heating jacket. The linseed oil was gradually heated to 110 °C and 76.48 parts trimethylolpropane (TMP), at a 5:1 mole ratio of alcohol (polyol) to linseed oil, were added to the reaction kettle, under sufficient agitation. The agitation rate was adjusted throughout the reaction to maintain a vortex ensuring efficient mixing.

The temperature was increased to 200 °C and 0.18-0.2 parts (based on total weight) of transesterification catalyst (sodium hydroxide) were added. The temperature was raised to 220 °C and maintained at this temperature for one hour. At the end of this period the cloudy reaction mixture was clear and the alcoholysis reaction was taken to be complete. A slight excess of phosphoric acid was added immediately to neutralize the catalyst and prevent a reverse reaction. The resulting alcoholized product was cooled to room temperature and stored under a blanket of nitrogen. The alcoholized product, a mixture of monoglycerides, diglycerides, unreacted polyol, unreacted oil was subjected to molecular distillation using a Molecular Still 3 (CVC Products, Rochester, NY). The unreacted polyol was separated (by decantation or filtration) and the alcoholized product was distilled at a temperature ranging from 190 to 240 °C and under

a high vacuum of 10 - 16 milliTorr. The linseed oil monoglyceride was obtained as the distillate.

The hydroxyl value of the distillate, as determined by ASTM D1957-86, was 316-320. Gas chromatography analysis indicated a presence of 50 - 90% monoglyceride.

A reaction kettle equipped with a thermometer, dry nitrogen inlet, stirrer and heating jacket was charged with 20 parts of the above oil polyol, 28.35 parts of a polytetramethylene glycol ether (PTMG) at 4.0/1.0 ratio of oil polyol/PTMG, 9.5 parts of dimethylolpropionic acid (DMPA) at 1.0/1.0 of DMPA/polyol ratio, 59.43 parts of dicyclohexylmethane 4-4'diisocyanate ($H_{12}$MDI) at 1.6/1.0 of NCO/OH ratio and 0.1 parts of T-12 catalyst (dibutyl tin dilaurate catalyst) under dry nitrogen. The mixture was heated to 80 °C. with agitation and the mixture was kept at this temperature until no DMPA particles were observed. The preparation of pendant COOH-containing NCO-terminated prepolymer based on the alcoholized linseed oil was complete when the NCO content, as determined by a di-n-butyl amine titration, was close to the theoretical NCO content (5.64%).

The reaction mixture was cooled to 60 °C and 7.17 parts of TEA (triethylamine) was added to it under agitation to carry out the neutralization between the COOH group of the prepolymer and TEA. The neutralization was kept at the same temperature for 30 minutes to obtain the pendant internal salt group-containing NCO-terminated prepolymer.

The reaction mixture was further cooled to 50 °C and 15.0 parts of N-methylpyrrolidone (NMP), 0.02 part of cobalt hydrocure drier, and 0.01 part of calcium drier were added with stirring. Immediately, 200 parts of water were added to the above mixture under vigorous agitation to carry out the dispersion thus forming the aqueous pendant salt group-containing NCO-terminated prepolymer.

To this dispersion was added rapidly 4.55 parts of ethylenediamine (EDA) to carry out the chain extension.

The resulting coating composition had a pH of 8-9, a viscosity of 50-100 cps at room temperature and a non-volatile content of 28-35%. The coating was a translucent dispersion producing a high-gloss, rapid drying film with good mechanical properties and chemical resistance after exposure in air for 3-5 days due to the crosslinking reaction through the oxidation and opening of the double bonds in the linseed oil structure of the coating.

The chemical resistance tests were carried out as per ASTM D1308-79, by adding ten drops of the stated test substances on the surface of the dry (3-5 days) coating film (3 mil thick) at room temperature. After one hour, the chemicals were wiped off, and changes on the coating surface were recorded.

EXAMPLE 19

Example 18 was repeated with the exception that glycerol was substituted as the trimethylpropane as the polyol in the alcoholysis reaction.

EXAMPLES 20 and 21

The commercially available sunflower oil monoglyceride, MYVEROLä 1892 (obtained from Eastman Chemical Co., Kingsport, Tenn.), was incorporated as the oil-polyol. The oil-polyol/PTMG ratios were maintained at 4:1, and NCO/OH ratio was 1.6:1, with 1:1 ratio of DMPA/polyol for example 20 and 0.75:1 ratio of DMPA/polyol for example 21.

The resulting coating compositions had a pH of 8-9, viscosity of 50-100 cps at room temperature and a non-volatile content of 28-35%. The coating was a translucent dispersion which produces a high gloss, rapid drying film with good mechanical and chemical properties after being exposed to air for 3-5 days.

COMPARATIVE EXAMPLE

Examples I and II of US-A-4,277,380 (issued July 7, 1981, assigned to Textron, Inc.) were followed, as follows.

One-hundred (100) parts of alkali refined linseed oil was charged in a 500 ml reaction kettle, equipped with a thermometer, dry nitrogen inlet, electrical stirrer and heating jacket. The linseed oil was preheated to 277-287° C with agitation for 30 min, under nitrogen gas to maintain a light color. Linseed oil was then cooled to 240-250 °C and 13.8 parts of pentaerythritol was added rapidly. Calcium naphthante (5% Ca) transesterification catalyst (0.08 parts) was added to the above mixture. That temperature was maintained until the cloudy mixture became clear. After that, the solubility of the reaction product was checked in ethanol or methanol. When a clear solution of the product in ethanol or methanol was observed, the alcoholysis was completed. A reaction kettle equipped with a thermometer, dry nitrogen inlet, stirrer and

heating jacket was charged with 100 parts of toluene diisocyanate, 96.3 parts of acetone, 41.6 parts of DMPA, 0.077 parts of T-12 catalyst under nitrogen atmosphere. The ratio of 0.79/1.0 of NCO/OH and 0.75/1.0 of DMPA/polyol were used for making carboxylic group-containing, isocyanate terminated prepolymer. It was used in the preparation of the oil modified-urethane polymers. The reaction mixture was heated to 57 °C and kept at that temperature until the isocyanate content (as determined by DBA titration method) measured between 9.3-9.5.

The reaction mixture was then cooled down to 45 °C and 243.8 parts of alcoholized linseed oil was added to it over a period of 1 hour. After the completion of addition of oil polyol, the temperature of the reaction mixture was raised to 57 °C, and the reaction was continued for five hours until the NCO value of less than 0.5% was reached.

To this polymer solution, 165 part of butoxyethanol was added and the mixture was then heated to 50 °C and acetone was distilled off partially to get a resinous polymer solution of oil modified carboxylic group containing urethane.

An aqueous coating composition containing a dispersion of the ammonia-neutralized polymer was prepared by mixing the following ingredients in the following order indicated below to the above oil modified carboxylic group-containing urethane polymer solution.

| Ingredient | Parts |
|---|---|
| Cobalt hydrocure drier | 1.54 |
| Manganese hydrocure drier | 1.54 |
| Activ-8* (38%, 1.10 phenanthroline) | 1.54 |
| L5310** (20% in Butyl Cellosolve) | 2.57 |
| Ammonium Hydroxide (28%) solution | 18.85 |
| Water | 931.0 |

* Drier Accelerator
** Silicone resin anti-foaming agent

## Claims

**1.** A composition preparable by a process comprising in a stepwise method:
(A) forming a prepolymer comprising:
(1) an alcoholized drying oil;
(2) a diisocyanate;
(3) a polyalkylene ether polyol; and
(4) a dihydroxy containing alkanoic acid polyol;
(B) neutralizing the prepolymer;
(C) contacting the neutralized prepolymer with water and a diamine to form an amine chain extended poly(urethane-urea) dispersion
wherein the chain-extended poly(urethane-urea) is capable of crosslinking at room temperature upon drying.

**2.** A composition as claimed in 1 wherein the drying oil is selected from the group consisting of selected dehydrated castor oil, sunflower oil, linseed oil, soybean oil, safflower oil, and mixtures thereof.

**3.** A composition as claimed in 2 wherein the drying oil is alcoholized in an alcoholysis reaction employing a polyol wherein the polyol is present in a ratio of polyol to drying oil of from 0.5:1 to 10:1.

**4.** A composition as claimed in 1 wherein the drying oil is linseed oil and the drying oil is alcoholized in an alcoholysis reaction employing a polyol selected from the group consisting of adipate polyester polyol, caprolactone based polyol, polyether triol, polyester based triol, trimethylol propane, polyether diol, pentaerythritol, and mixtures thereof, employing a ratio of polyol:drying oil within a range of from 1:0.75 to 5:1.

**5.** A composition as claimed in 4 wherein the drying oil is alcoholized by a polyol selected from the group consisting of with trimethylol propane and pentaerythritol.

6. A composition as claimed in 5 wherein the drying oil is alcoholized by trimethylol propane in a reaction employing a ratio of polyol:drying oil within a range of from 1:1 to 5:1;

7. A composition as claimed in 6 wherein the polyalkylene ether polyol is selected from the group consisting of poly(oxytetramethylene)glycol, poly(oxypropylene)glycol, poly(caprolactone)glycol, poly(1,6-hexadiol adipate)glycol, poly(1,4-butyl adipate)glycol, hydroxy-terminated polybutadiene, poly(carbonate)glycol, and mixtures thereof, and the alcoholized drying oil and polyalkylene ether polyol are employed in a ratio of alcoholized drying oil:polyalkylene ether polyol of 10:90 to 80:20.

8. A composition as claimed in 1 wherein the polyalkylene ether polyol is selected from the group consisting of poly(oxytetramethylene)glycol, poly(oxypropylene)glycol, poly(caprolactone)glycol, poly(1,6-hexadiol adipate)glycol, poly(1,4-butyl adipate)glycol, hydroxy-terminated polybutadiene, poly(carbonate)glycol, and mixtures thereof, and the alcoholized drying oil and polyalkylene ether polyol are employed in a ratio of alcoholized drying oil:polyalkylene ether polyol of 1:99 to 99:1.

9. A composition as claimed in 8 wherein in step (C) the water, a drying agent, and a hydrophilic solvent are contacted with the neutralized prepolymer prior to contacting the neutralized prepolymer with diamine.

10. A composition as claimed in 9 wherein in step (A) the diisocyanate is selected from the group consisting of 2,4-tolylene diisocyanate, 2,6-tolylene diisocyanate, 1,4-cyclohexane diisocyanate, dicyclohexylmethane 4,4'-diisocyanate, xylylene diisocyanate, 1-isocyanato-3-isocyanatomethyl-3,5,5-trimethylcyclohexane, hexamethylene diisocyanate; tetramethylxylene diisocyanate, 2,4,4-trimethylhexamethylene diisocyanate, and mixtures thereof; the dihydroxy containing alkanoic acid is a 2,2-dimethylolalkanoic acid represented by a structural formula:

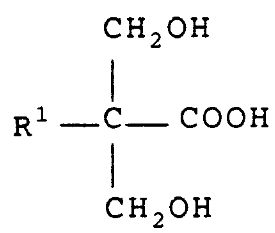

wherein $R^1$ represents hydrogen or a $C_1$-$C_8$ alkyl;

in step (C) the water is present in an ratio of water to neutralized prepolymer of from 50:1 to 90:1; and

the poly(urethane-urea) dispersion has a viscosity of from 30 to 100 cps.

11. A composition as claimed in 10 wherein

in step (A) the diisocyanate is selected from the group consisting of dicyclohexylmethane 4,4'-diisocyanate, 1-isocyanato-3-isocyanatomethyl-3,5,5-trimethylcyclohexane, tetramethylxylene diisocyanate, and mixtures thereof; and the dihydroxy containing alkanoic acid is 2,2-dimethylolpropionic acid;

in step (B) the prepolymer is neutralized with a triethylamine;

in step (C) the water is present in an ratio of water to neutralized prepolymer of from 60:1 to 70:1 and the diamine is ethylene diamine; and

the poly(urethane-urea) dispersion has a viscosity of from 50 to 100 cps.

12. A composition as claimed in 1 wherein

in step (A) the drying oil is linseed oil alcoholized with trimethylol propane in a ratio of polyol:drying oil of 1:1 to 5:1; the diisocyanate is 2,2-dimethylolpropionic acid; the polyalkylene ether polyol is poly(oxytetramethylene)glycol; the dihydroxyalkanoic acid is 2,2-dimethylolpropionic acid;

in step (B) the neutralizing agent is a triethyleneamine;

in step (C) the neutralized prepolymer is contacted with a drying agent, hydrophilic solvent, and water prior to the diamine.

**13.** A method for preparing a poly(urethane-urea) composition comprising in a stepwise fashion:
(A) forming a prepolymer comprising:
(1) an alcoholized drying oil;
(2) a diisocyanate;
(3) a polyalkylene ether polyol; and
(4) a dihydroxy containing alkanoic acid polyol;
(B) neutralizing the prepolymer;
(C) contacting the neutralized prepolymer with water and a diamine to form an amine chain extended poly(urethane-urea) dispersion
wherein the chain-extended poly(urethane-urea) is capable of crosslinking at about room temperature upon drying.

**14.** A method as claimed in 13 wherein the drying oil is selected from the group consisting of dehydrated castor oil, sunflower oil, linseed oil, soybean oil, safflower oil, mixtures thereof.

**15.** A method as claimed in 14 wherein the polyalkylene ether polyol is present in a ratio of alcoholized drying oil:polyalkylene ether polyol of from 1:1 to 2.5 to 1; and the diamine contains from 0 to 10 carbon atoms.

**16.** A method as claimed in 15 wherein the polyalkylene ether polyol is selected from the group consisting of poly(oxytetramethylene)glycol, poly(oxypropylene)glycol, poly(caprolactone)glycol, poly(1,6-hexanediol adipate)glycol, poly(1,4-butyl adipate)glycol, hydroxy-terminated polybutadiene, poly-(carbonate)glycol, and mixtures thereof and the polyalkylene ether polyol is present in a ratio of alcoholized drying oil:polyalkylene ether polyol of from 1:1 to 1.6:1.

**17.** A method as claimed in 16 wherein in step (C) the water, a drying agent, and a hydrophilic solvent are contacted with the neutralized prepolymer prior to contacting the neutralized prepolymer with diamine and the poly(urethane-urea) dispersion has a viscosity of from 30 to 100 cps.

**18.** A method as claimed in 13 wherein in step (A) the diisocyanate is selected from the group consisting of dicyclohexylmethane 4,4'-diisocyanate, 1-isocyanato-3-isocyanatomethyl-3,5,5-trimethylcyclohexane, tetramethylxylene diisocyanate, and mixtures thereof; and the dihydroxy containing alkanoic acid is 2,2-dimethylolpropionic acid;
in step (B) the prepolymer is neutralized with a triethylamine;
in step (C) the water is present in an ratio of water to neutralized prepolymer of from 60:1 to 70:1 and the diamine is ethylene diamine; and
the poly(urethane-urea) dispersion has a viscosity of from 50 to 100 cps.

**19.** A method as claimed in 13 wherein
in step (A) the polyalkylene ether polyol is poly(oxytetramethylene)glycol; the dihydroxyalkanoic acid is 2,2-dimethylolpropionic acid;
in step (B) the neutralizing agent is a triethyleneamine;
in step (C) the neutralized prepolymer is contacted with a drying agent, hydrophilic solvent, and water prior to the diamine.

**20.** A method of using as a coating for wood surfaces a water-dispersible poly(urethane-urea) composition preparable by a process comprising in a stepwise method:
(A) forming a prepolymer comprising:
(1) an alcoholized drying oil;
(2) a diisocyanate;
(3) a polyalkylene ether polyol; and
(4) a dihydroxy containing alkanoic acid polyol;
(B) neutralizing the prepolymer;
(C) contacting the neutralized prepolymer with water and a diamine to form an amine chain extended poly(urethane-urea) dispersion
wherein the chain-extended poly(urethane-urea) is capable of crosslinking at about room temperature upon drying.